# EUROPÄISCHE PATENTSCHRIFT

(11) **EP 1 898 761 B1**
(45) Veröffentlichungstag und Bekanntmachung des Hinweises auf die Patenterteilung: **29.04.2009**
(21) Anmeldenummer: 06708535.7
(22) Anmeldetag: 27.02.2006
(51) Int. Cl.: A47J 43/07, F16B 5/06

(54) **BODENBEFESTIGUNG FÜR HAUSHALTSGERÄTE**
BOTTOM FIXTURE FOR HOUSEHOLD APPLIANCES
SYSTEME DE FIXATION DE FOND POUR APPAREILS MENAGERS

(30) Priorität: 19.05.2005 DE 102005023157
(43) Veröffentlichungstag der Anmeldung: 19.03.2008
(73) Patentinhaber: BSH Bosch und Siemens Hausgeräte GmbH, 81739 München (DE)
(72) Erfinder: FRITZ, Jürgen, 83358 Seebruck (DE); KO, John, Block C/f, On Lok Tsuen, Hong Kong (CN); MÜHLBACHER, Richard, 83224 Grassau (DE); STEFFL, Michael, 83250 Marquartstein (DE)
(86) Internationale Anmeldenummer: PCT/EP2006/060303
(87) Internationale Veröffentlichungsnummer: WO 2006/122843

(56) Entgegenhaltungen:
- WO-A-03/020605
- WO-A-20/05095806
- GB-A- 486 367
- US-A- 5 577 779

## Beschreibung

Die vorliegende Erfindung betrifft ein Haushaltsgerät, insbesondere ein elektrisches oder elektronisches Haushaltsgerät, mit einem Gehäuse und mit einem lösbar daran befestigten Boden. Insbesondere betrifft die Erfindung einen Wasserkocher, dessen Boden lösbar am Gehäuse befestigt ist.

Bisher sind Verbindungstechniken für Haushaltsgeräte bekannt, bei denen ein Boden, insbesondere ein Kunststoffboden, mit einem Kunststoffgehäuse entweder verschraubt oder verhakt ist.

Im Falle eines mit dem Kunststoffgehäuse verschraubten Bodens befinden sich die Gewindelöcher im Kunststoffgehäuse. Durch passend angeordnete Löcher im Boden werden die Schrauben hindurchgesteckt und in den Gewindelöchern des Kunststoffgehäuses angezogen. Nachteilig dabei ist, dass die gesamte Zugkraft, welche zur Befestigung des Bodens erforderlich ist, auf die Kunststoffgewindeflanken wirkt. Bei der Montage des Bodens am Gehäuse muss daher genau darauf geachtet werden, dass das Anzugsdrehmoment der Schrauben nicht überschritten wird; da ansonsten eine irreversible Beschädigung des Kunststoffgewindes eintritt. Ein weiterer Nachteil zeigt sich bei mehrfachem Ab- und Wiederanschrauben des Bodens. Beim erneuten Einschrauben der Schraube in das Gewinde kann das Kunststoffgewinde beschädigt werden, wenn die Gewindegänge der Schraube nicht in die bei der Erstmontage geschnittenen Gewindegänge des Kunststoffgewindes eingreifen. Die Schraube schneidet dann in die Kunststoffgewindeflanken ein und mindert dadurch deren Festigkeit.

Die WO 03/020605 A1 beschreibt eine einfache und gut haltbare Verbindung zwischen einem ersten und einem zweiten Körper, die beispielsweise Teile eines Küchengeräts sind. Hierzu wird ein Rastvorsprung durch eine Schraube in eine Rastöffnung gedrückt.

Bei einem mit dem Kunststoffgehäuse verhakten Boden müssen elastisch federnde Haken beim Montieren des Bodens am Gehäuse derart deformiert werden, dass ein Eindrücken des Bodens in das Gehäuse möglich wird, wobei die Haken an der Gehäuseinnenseite entlang gedrückt werden, bis sie in eine Ausnehmung auf der Innenseite des Kunststoffgehäuses einrasten. Ein Nachteil ist dabei, dass die Haken in der Einbauposition nicht formschlüssig gesichert sind. Für eine Demontage des Bodens muss jeder einzelne Haken mit zusätzlichen Werkzeugen aus der Verankerung gedrückt werden, wobei der Boden gleichzeitig wieder aus dem Gehäuse gezogen werden muss: Insbesondere bei Anordnung einer Vielzahl solcher Haken ist selbst bei Verwendung eines Spezialwerkzeugs nicht ausgeschlossen, dass am Boden oder am Kunststoffgehäuse Schäden bzw. Demontagespuren verbleiben oder dass Haken abgebrochen werden.

Es ist daher eine Aufgabe der vorliegenden Erfindung, ein Haushaltsgerät mit einer alternativen Befestigungsmöglichkeit für einen daran lösbar befestigten Boden zur Verfügung zu stellen, bei welchem die oben genannten Nachteile vermieden werden.

Die Aufgabe wird durch ein Haushaltsgerät mit_einem Gehäuse und mit einem lösbar daran befestigten Boden gelöst, bei dem der Boden für die Befestigung am Gehäuse zumindest einen Haken, ein dem Haken zugeordnetes Stützelement, ein zwischen dem Haken und dem Stützelement beweglich gelagertes Spreizelement, das eine Ausnehmung mit einem Innengewinde zur Aufnahme einer Schraube aufweist und ein mit dem Spreizelement in Wirkverbindung stehendes als Schraube ausgebildetes Stellelement umfasst, so dass eine Bewegung des Stellelements eine Bewegung des Spreizelements bewirkt, wodurch der Haken aus einer Ausgangsposition durch das Spreizelement in eine Ausnehmung des Gehäuses gedrückt wird.

Als Stellelement kann vorzugsweise eine Kopfschraube zum Einsatz kommen. Diese kann durch Ausnehmungen im Boden, wie zum Beispiel ein Langloch, gesteckt werden, so dass der Schraubenkopf am Boden anliegt. Zur Aufnahme der Schraube weist das Spreizelement eine Ausnehmung auf. Diese Ausnehmung kann in Form eines glattflächigen Bohrlochs ausgeführt sein, in das die Schraube beim erstmaligen Einschrauben ein Gewinde schneidet. Das Spreizelement ist dabei vorzugsweise aus Kunststoff gefertigt. Alternativ dazu kann das Spreizelement auch eine Bohrung mit Innengewinde aufweisen. Dabei können grundsätzlich alle Gewindearten zum Einsatz kommen. Bei dem Gewinde kann es sich sowohl um ein Rechts- als auch um ein Linksgewinde handeln.

Damit der Haken in eine Ausnehmung des Gehäuses gedrückt werden kann, muss zuvor eine Kraft auf den Haken wirken, welche den Haken aus seiner Ausgangsposition in die Ausnehmung, beispielsweise eine Nut, hineindrückt. Diese Kraft wird durch das Spreizelement erzeugt, das sich bei einer passenden Bewegung des Stellelements zwischen Haken und Stützelement drückt. Bei Verwendung einer Schraube als Stellelement bewegt sich beispielsweise das Spreizelement beim Anziehen der Schraube entlang der Schraubenlängsachse in Richtung Schraubenkopf. Dabei gleitet das Spreizelement entlang wenigstens einer zur Bewegungsrichtung geneigten Fläche, wodurch eine Druckkraft auf den Haken ausübt wird. Die geneigte Fläche, ähnlich einer schiefen Ebene, kann sowohl am Haken als auch am Stützelement als auch am Spreizelement angeordnet sein. Die Bewegung des Stellelements, z. B. die Drehbewegung der Schraube, bewirkt somit eine Bewegung des Spreizelements zwischen Haken und Stützelement, so dass der Haken aus einer Ausgangsposition durch das Spreizelement in eine Ausnehmung des Gehäuses gedrückt wird. Das Zusammenwirken von Haken, Stützelement, Spreizelement und Stellelement ist ähnlich den Wirkmechanismen eines Spreizdübels. Die Bewegungsrichtung des Spreizelements zwischen Haken und Stützelement, z. B. beim Anziehen der Schraube zum Schraubenkopf hin, wird im Folgenden als Anzugsrichtung bezeichnet.

Eine Bodenbefestigung erfolgt durch ein Verfahren zur Montage eines eine Anzahl von Haken aufweisenden Bodens an einem Gehäuse eines Haushaltgerätes, bei welchem in einem ersten Schritt ein Einfügen des Bodens in das Gehäuse ohne Deformation der Haken erfolgt und in einem zweiten Schritt der Boden am Gehäuse mittels der Haken befestigt wird, in dem diese nach Abschluss des ersten Schrittes in einer Ausnehmung des Gehäuses verankert werden.

Das Verankern der Haken im zweiten Schritt wird dabei von einem Spreizelement bewirkt, welches zwischen den Haken und zumindest einem Stützelement in Anzugsrichtung bewegt wird, wodurch die Haken aus einer Ausgangsposition in die Ausnehmung im Gehäuse gedrückt werden.

Die Ausnehmungen sind vorzugsweise auf der Innenseite des Gehäuses angeordnet, wobei deren Lage und Form in Abhängigkeit von der Lage und Form der Haken gewählt werden kann. Es kann sowohl eine Ausnehmung je Haken als auch eine gemeinsame Ausnehmung für mehrere Haken, beispielsweise in Form einer auf der Innenseite des Gehäuses parallel zur Ebene des Bodens umlaufenden Nut vorgesehen sein. Eine bestimmte exakte Orientierung des Bodens gegenüber dem Gehäuse vor Montage des Bodens ist dann, insbesondere bei zylindersymmetrischem Gehäuse und Boden, nicht erforderlich.

Nach einer bevorzugten Ausführungsform ist das Spreizelement keilförmig ausgebildet. Das Spreizelement kann insbesondere pyramidenstumpfförmig oder kegelstumpfförmig sein. Auch Kombinationen verschiedener Formen sind möglich. Zum Beispiel kann ein quaderförmiges Spreizelement eingesetzt werden, welches nur an zwei sich gegenüberliegenden Seiten in einem Keilwinkel zueinander angeordnete Keilflächen aufweist. Auch nur eine geneigte Keilfläche ist denkbar.

Das Stützelement wird in einer bevorzugten Ausführungsform von einer Hülse gebildet, die in Hülsenlängsrichtung verlaufende Schlitze aufweist, welche ein Segment der Hülsenwandung abtrennen. Das abgetrennte Segment kann dabei als Haken ausgebildet sein, so dass zumindest ein Teil des Rests der Hülsenwandung, zum Beispiel der dem abgetrennten Segment gegenüberliegende Teil der Hülse, das Stützelement bildet. Auch bei dieser Ausführungsform ist das Spreizelement in der mit dem Boden verbundenen Hülse beweglich gelagert.

Nach einer besonders vorteilhaften Ausgestaltung kann das Spreizelement derart gestaltet sein, dass es seine Position zwischen Stützelement und Haken aufgrund von Selbsthemmung beibehält. Aus dieser Position kann es nur mittels zusätzlicher Krafteinwirkung entfernt werden, beispielsweise durch Drehen der Schraube. Bei zum Beispiel keilförmiger Ausführung des Spreizelements kann dieses einen Keilwinkel aufweisen, dessen Größe eine Selbsthemmung des Spreizelements zwischen dem Haken und dem Stützelement bewirkt. Wird das Spreizelement zur Befestigung des Bodens am Gehäuse zwischen Haken und Stützelement verkeilt, so verbleibt das Spreizelement zwischen Haken und Stützelement selbsthemmend lagegesichert in seiner Position. Dieser Zustand bleibt selbst dann erhalten, wenn das Gewinde der Schraube bzw. das Gewinde des Spreizelements beim Anziehen der Schraube beschädigt wird und seine Funktion verliert. Somit ist in jedem Fall eine sichere Befestigung des Bodens am Gehäuse gewährleistet.

Je nach Größe und Ausgestaltung des Bodens kann der Boden mehrere Haken, mehrere Stützelemente, mehrere Hülsen, mehrere Spreizelemente und mehrere Schrauben aufweisen. Dabei bilden jeweils ein Haken, ein Stützelement, ein Spreizelement und ein Stellelement eine "Befestigungseinheit ", wobei jeweils Haken und zugeordnetes Stützelement wie oben bereits beschrieben auch als Teil einer Hülse ausgebildet sein können.

Bei bestimmten Haushaltsgeräten, wie beispielsweise einem Wasserkocher, einer Kaffeemaschine, einem Eierkocher oder Ähnlichem, kann eine im oder am Boden angeordnete Heizplatte und/oder eine den Boden oder die Heizplatte gegenüber dem Gehäuse abdichtende Ringdichtung vorgesehen sein. Die Heizplatte kann dabei vorzugsweise während des Einfügens des Bodens in das Gehäuse positioniert bzw. gegenüber dem Gehäuse zentriert werden. Ebenso kann eine zwischen Boden und Gehäuse bzw. zwischen Heizplatte und Gehäuse angeordnete Ringdichtung während des Einfügens des Bodens in das Gehäuse vorgespannt werden.

Bezüglich der Demontage wird die Aufgabe gelöst durch ein Verfahren zur Demontage eines wie oben bereits beschriebenen montierten Gehäusebodens, bei welchem durch eine Bewegung des Spreizelements oder der Spreizelemente entgegen der Anzugsrichtung und ein Lösen der Haken aus ihrer Verankerung in der Ausnehmung des Gehäuses durch ein Zurückbewegen der elastischen Haken in ihre Ausgangsposition bewirkt wird. Danach kann der Boden ohne Deformation der Haken vom Gehäuse entfernt werden.

Sofern die Spreizelemente mit Hilfe von Schrauben bewegt werden, gibt es zwei prinzipielle Varianten zur Demontage des Gehäusebodens: Bei einer ersten Variante bewirkt bereits das Lösen der Schraube eine im Wesentlichen geradlinige Bewegung des Spreizelements entlang der Schraubenlängsachse vom Schraubenkopf weg und somit eine mit jeder Umdrehung der Schraube nachlassende Druckkraft, welche auf den Haken wirkt. Die Schraube ist zu diesem Zweck im bzw. am Boden geeignet gelagert, so dass sich die Schraube beim Lösen nicht aus dem Boden herausdreht, sondern ein Gegenlager für die Bewegung des Spreizelementes entgegen der Anzugsrichtung bildet. Da der Haken bei der Montage lediglich elastisch verformt wurde, kann er bei der Demontage elastisch aus der Ausnehmung im Gehäuse zurück in seine Ausgangsposition federn. Dabei kann zwischen den Kontaktflächen von Spreizelement und Haken sowie Spreizelement und Stützelement Gleitreibung oder Haftreibung auftreten. Bei Gleitreibung bewirkt nach dem Lösen der Schraube bereits der zurückfedernde Haken eine Bewegung des Spreizelements entgegen der Anzugsrichtung. Bei Haftreibung bzw. Selbsthemmung des Spreizelements zwischen Haken und Stützelement wird die Bewegung des Spreizelements entgegen der Anzugsrichtung erst durch die Drehbewegung der Schraube beim Lösen der Schraube bewirkt. Die Schraube stützt sich dabei in ihrer Lagerung am Boden ab. Nachdem alle Haken in ihre Ausgangsposition zurückgekehrt sind, kann der Boden ohne Deformation der Haken aus dem Gehäuse entnommen werden.

Bei einer alternativen Ausführungsvariante muss bei Demontage des Bodens nach dem Lösen der Schraube oder der Schrauben zusätzlich eine Kraft auf das Spreizelement wirken, um eine Bewegung des Spreizelements entgegen der Anzugsrichtung zu bewirken. Erst dadurch wird ein Lösen der Haken aus ihrer Verankerung in der Ausnehmung des Gehäuses bei gleichzeitigem Zurückbewegen der elastischen Haken in ihre Ausgangsposition bewirkt. Danach kann auch in diesem Fall der Boden ohne Deformation der Haken vom bzw. aus dem Gehäuse entfernt werden. Das Spreizelement ist in dieser Ausführungsform zwischen Haken und Stützelement aufgrund von Selbsthemmung ortsfest gesichert. Das Lösen der Schraube bewirkt bei dieser Ausführungsform nicht automatisch eine Bewegung des Spreizelements, sondern nur eine Bewegung des Schraubenkopfes vom Boden weg. Das Spreizelement muss nach dem Lösen der Schrauben durch äußere Krafteinwirkung aus seiner selbstgehemmten Lage gelöst werden. Die Kraft muss dabei größer sein als die von der Selbsthemmung erzeugte Haftreibungskraft, welche auf die Kontaktflächen zwischen Spreizelement und Haken sowie zwischen Spreizelement und Stützelement wirkt. Diese Kraft kann beispielsweise über die gelöste Schraube, welche noch über das Gewinde mit dem Spreizelement in Wirkverbindung steht, von außen auf das Spreizelement übertragen werden, indem die Schrauben in den Boden hineingedrückt werden.

Vorzugsweise können am Stützelement und/oder Haken Anschlagelemente zur Wegbegrenzung des Spreizelementes angeordnet sein. Mittels dieser Endanschläge kann die Bewegung des Spreizelementes in beide Richtungen, in Anzugsrichtung und entgegen der Anzugsrichtung, begrenzt werden. Das hat den Vorteil, dass damit auch die vom Spreizelement auf den Haken wirkende Druckkraft begrenzbar ist und eine Beschädigung von Haken und/oder Spreizelement, beispielsweise eine plastische Verformung oder sogar Rissbildung aufgrund einer Überbeanspruchüng, vermieden werden kann. In die Richtung entgegen der Anzugsrichtung können die Anschlagelemente das Herausfallen der zwischen Stützelement und Haken geführten Spreizelemente aus dem Boden verhindern. So können z. B. die Spreizelemente zwischen Stützelement und Haken gehalten werden, noch bevor eine als Stellelemente dienende Schraube den Halt des Spreizelementes übernimmt. Das hat den Vorteil, dass das Spreizelement in einem Vormontageschritt zwischen dem Stützelement und dem Haken so positioniert bzw. dessen Gewindeloch so ausgerichtet werden kann, dass bei Montage der Schrauben das Schraubengewinde direkt in das Bohrloch bzw. das Innengewinde des Spreizelements eingreifen kann.

Die Anschlagelemente können außerdem mit den geneigten Flächen kombiniert werden. Es können auch mehrere geneigte Flächen beispielsweise am Stützelement angeordnet sein. Die geneigten Flächen können zum Beispiel Teil einer Anzahl von Stützrippen sein, welche zur Erhöhung der Steifigkeit des Stützelements zwischen Stützelement und Haken angeordnet sein können. Dabei kann das Stützelement mit den Stützrippen einteilig aufgebaut sein.

Das Prinzip der Erfindung wird im Folgenden anhand von Figuren beispielshalber noch einmal näher erläutert. Dabei zeigen:

Figur 1 eine Explosivdarstellung eines erfindungsgemäßen Wasserkochergehäuses mit Boden im Schnitt in perspektivischer Ansicht;

Figur 2 einen Schnitt durch einen Teil eines in ein Wasserkochergehäuse eingefügten Bodens vor Verankerung des Bodens am Gehäuse;

Figur 3 einen Schnitt durch einen Teil eines in ein Wasserkochergehäuse eingefügten Bodens nach Verankerung des Bodens am Gehäuse.

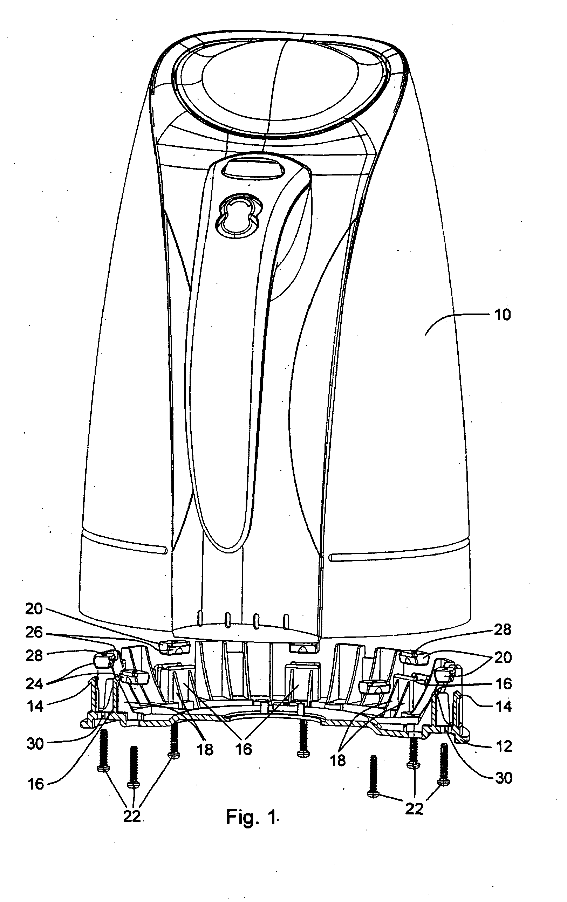

Figur 1 zeigt einen Wasserkocher mit einem Gehäuse 10 und einem Boden 12, mit welchem eine rotationssymmetrische Öffnung im unteren Bereich des Gehäuses 10 verschließbar ist. Der entsprechend der Öffnung rotationssymmetrische Boden 12 weist an seinem kreisförmigen Umfang mehrere Haken 14 auf, welche einseitig mit dem Boden 12 verbunden sind. Jedem Haken 14 ist ein Stützelement 16 zugeordnet, welches zur Erhöhung seiner Steifigkeit rückseitig zusätzlich Stützrippen 18 aufweist. Sowohl die Haken 14 als auch die Stützelemente 16 und die Stützrippen 18 sind integrale Bestandteile des Bodens 12.

Jedem Haken 14 ist jeweils ein Stützelement 16 sowie - wie in der Explosivdarstellung in Figur 1 gezeigt - ein Spreizelement 20 und eine Schraube 22 zugeordnet. Die Spreizelemente 20 weisen in dieser Ausführungsform nach Art von "Flachkeilen" zwei sich gegenüberliegende, winklig zueinander angeordnete Keilflächen 24 und 26 auf. Im montierten Zustand liegt die eine Keilfläche 24 des Spreizelements 20 am Haken 14 und die andere Keilfläche 26 am Stützelement 16 an. Jedes der Spreizelemente 20 weist ferner eine mit einem Innengewinde versehene Bohrung 28 auf, welche zur Aufnahme der Schraube 22 geeignet ist. Jede der Schrauben 22 kann durch eine im Boden 12 zwischen Stützelement 16 und Haken 14 vorgesehene Öffnung 30 gesteckt werden, wobei dann der Schraubenkopf an der Unterseite am Boden 12 anliegt.

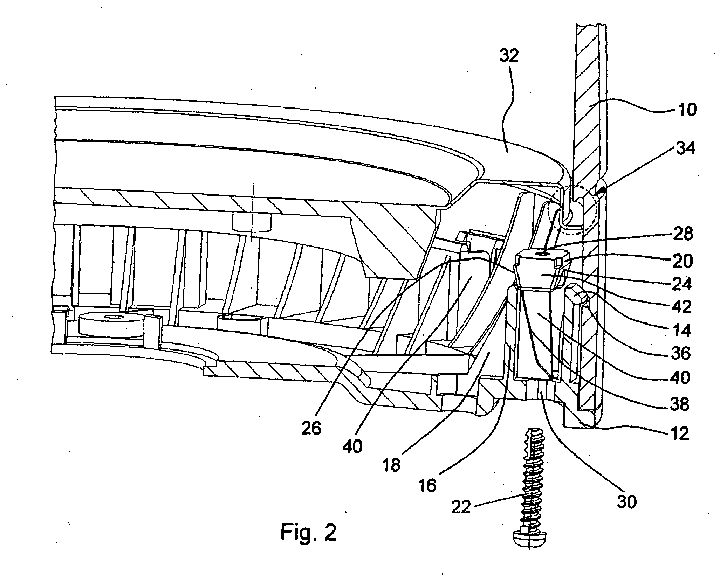

In Figur 2 ist ein erfindungsgemäßer Boden 12 mit einer Heizplatte 32 in einer vergrößerten Detailansicht im Schnitt dargestellt. Gezeigt ist der Boden 12 nach dem Einfügen in das Gehäuse 10 des Wasserkochers. In dieser Montageposition wird die Heizplatte 32 gegenüber dem Gehäuse 10 durch eine in Figur 2 nicht dargestellte Ringdichtung abgedichtet, welche im Bereich 34 angeordnet ist.

Der Haken 14 befindet sich in diesem Zustand in seiner Ausgangsposition vor einer Ausnehmung 36 im Gehäuse 10. Die Ausnehmung 36 ist dabei in Lage und Form dem Haken 14 angepasst. In dieser Ausführungsform ist die Ausnehmung 36 als Ringnut ausgeführt, welche umlaufend im passenden Abstand vom unteren Rand des Gehäuses 10 in die Innenseite des Gehäuses 10 eingearbeitet ist.

Auch in Figur 2 sind das Spreizelement 20 und die Schraube 22 in Explosivdarstellung gezeigt. Beide werden normalerweise vor dem Einfügen des Bodens 12 in das Gehäuse 10 am Boden 12 vormontiert. Dabei greift das Gewinde der Schraube 22 in das Innengewinde der Bohrung 28 des Spreizelements 20 ein. Das Spreizelement 20 liegt dann mit seiner einen Keilfläche 24 am Stützelement 16 und mit seiner anderen Keilfläche 26 am Haken 14 an. Der Gewindeteil der Schraube 22 ragt dann durch die Öffnung 30 im Boden hindurch, wobei der Kopf der Schraube 22 am Boden 12 anliegt.

Zur Erhöhung der Steifigkeit weist, wie oben erwähnt, jedes Stützelement 16 zusätzlich zwei Stützrippen 18 auf. Zwischen Haken 14 und Stützelement 16 ist eine winklig zum Stützelement 16 angeordnete Führungsfläche 38 auf einer ähnlich der Stützrippe 18 ausgeführten inneren Stützrippe des Stützelements 16 angeordnet. Die die Führungsfläche 38 aufweisende innere Stützrippe kann auch an eine Seitenwand 40 des Stützelements 16 angeformt sein. Die Führungsfläche 38 steht bei montiertem Spreizelement 20 mit der zum Stützelement 16 weisenden Keilfläche 26 in Kontakt.

Nach dem Zusammenfügen von Spreizelement 20 und Schraube 22 kann das Spreizelement 20 zwischen Stützelement 16 und Haken 14 durch Drehung der Schraube 22 zum Boden hin bewegt werden. Das Spreizelement 20 wird dabei von den mit den beiden Keilflächen 24 und 26 in Kontakt stehenden Führungsflächen 38 von der Rückseite des Hakens 14 und von zwei Seitenwänden 40 des Stützelements 16 geführt. Das Spreizelement 20 wird beim Anziehen der Schraube 22 von den Führungsflächen 38 gegen den Haken 14 und dieser in die Ausnehmung 36 des Gehäuses 10 gedrückt. Da die Öffnung 30 im Boden 12 die Form eines Langloches aufweist, kann sich die Schraube 22 während des Anziehens ein Stück parallel zum Stützelement 16 verschieben und somit der Bewegung des Spreizelementes 20 in Richtung des Hakens 14 nachfolgen. Eine Schräglage von Spreizelement 20 und Schraube 22 wird dadurch vermieden.

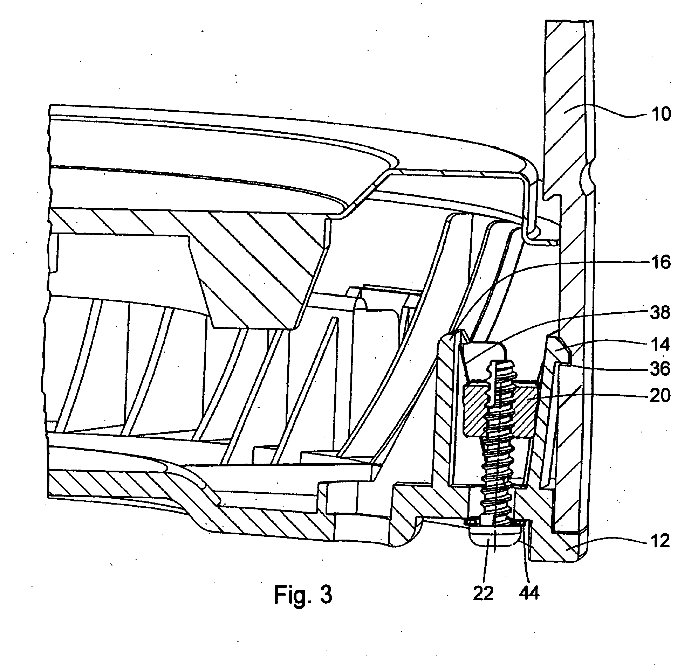

Figur 3 zeigt den Boden 12 im Gehäuse 10 verankert. Durch Drehung der Schraube 22 hat sich das Spreizelement 20 zwischen Haken 14 und Stützelement 16 nach unten zum Boden hin bewegt, wobei das Spreizelement 20 von der Führungsfläche 38 auf der inneren Stützrippe des Stützelements 16 in Richtung des Hakens 14 gedrückt wurde. Der auf seiner gesamten Länge elastisch federnd ausgebildete Haken 14 ist dadurch in die Ausnehmung 36 des Gehäuses 10 gedrückt worden und greift nun in die Ausnehmung 36 im Gehäuse 10 ein. Der Boden 12 ist daher über die mit dem Boden 12 integral verbundenen Haken 14 mit dem Gehäuse 10 verhakt.

In dieser Position wird das Spreizelement 20 zwischen Stützelement 16 und Haken 14 von der Schraube 22 gehalten. Zwischen dem Kopf der Schraube 22 und dem Boden 12 ist eine Scheibe 44 angeordnet, welche den Kunststoffboden 12 vor Beschädigungen beim Drehen der Schraube 22 schützt. Außerdem erhöht die Scheibe 44 die Auflagefläche des Kopfes der Schraube 22 am Boden 12 und vermindert somit die zwischen Schraube 22 und Boden 12 wirkende Flächenpressung..

Sowohl bei der Montage als auch bei der Demontage des Bodens 12 bestimmt die für die Verankerung des Hakens 14 in der Ausnehmung 36 des Gehäuses 10 erforderliche Länge der Bewegung des Hakens 14 die Länge der Bewegung des Spreizelements 20. Die Bewegung des Spreizelements 20 wird dabei von einer Drehbewegung der mit dem Spreizelement 20 in Wirkverbindung stehenden Schraube 22 bewirkt. Die Drehbewegung beim Anziehen der Schraube 22 bewirkt dabei eine im Wesentlichen geradlinige Bewegung des Spreizelements 20 entlang der Schraubenlängsachse in Richtung des Schraubenkopfes, wobei das Spreizelement 20 auf den Haken und die Führungsfläche 38 der inneren Stützrippe des Stützelements 16 drückt. Da das Stützelement 16 konstruktiv bedingt seine ortsfeste Lage dabei nicht ändert, kann der elastisch verformbare Haken 14 vom Spreizelement 20 in eine Ausnehmung 36 des Gehäuses 10 gedrückt werden, bis der Haken 14 am Gehäuse 10 anschlägt. In dieser Position wirkt die durch das Spreizelement 20 erzeugte Druckkraft auf den Haken 14 und das Stützelement 16 weiter und sichert somit die formschlüssige Verbindung zwischen Boden 12 und Gehäuse 10.

Da es sich bei dem vorhergehenden, detailliert beschriebenen Wasserkocher um ein Ausführungsbeispiel handelt, kann es in üblicher Weise vom Fachmann in einem weiten Umfang modifiziert werden, ohne den Bereich der Erfindung zu verlassen. Insbesondere können auch die konkreten Ausgestaltungen des Spreizelements 20 in anderer Form als in der hier beschriebenen erfolgen. Ebenso kann der Boden 12 in einer anderen Form ausgestaltet werden, wenn dies aus Platzgründen bzw. designerischen Gründen notwendig ist. Weiterhin schließt die Verwendung der unbestimmten Artikel "ein " bzw. "eine " nicht aus, dass die betreffenden Merkmale auch mehrfach vorhanden sein können.

Bezugszeichenliste

10 Gehäuse

12 Boden

14 Haken

16 Stützelement

18 Stützrippe

20 Spreizelement

22 Schraube

24 Keilfläche

26 Keilfläche

28 Bohrung

30 Öffnung

32 Heizplatte

34 Bereich

36 Ausnehmung

38 Führungsfläche

40 Seitenwand

42 Seitenfläche

44 Scheibe

## Patentansprüche

1. Haushaltsgerät mit einem Gehäuse (10) und mit einem lösbar daran befestigten Boden (12), wobei der Boden (12) für die Befestigung am Gehäuse (10) zumindest einen Haken (14), ein dem Haken (14) zugeordnetes Stützelement (16), ein zwischen dem Haken (14) und dem Stützelement (16) beweglich gelagertes Spreizelement (20) und ein mit dem Spreizelement (20) in Wirkverbindung stehendes Stellelement (22) umfasst, so dass eine Bewegung des Stellelements (22) eine Bewegung des Spreizelements (20) bewirkt, wodurch der Haken (14) aus einer Ausgangsposition durch das Spreizelement (20) in eine Ausnehmung (36) des Gehäuses (10) gedrückt wird, **dadurch gekennzeichnet, dass** das Stellelement (22) als Schraube ausgebildet ist, und
das Spreizelement (20) eine Ausnehmung (28) mit einem Innengewinde zur Aufnahme der Schraube (22) aufweist.

2. Haushaltsgerät nach Anspruch 1, **dadurch gekennzeichnet, dass** das Spreizelement (20) keilförmig ist.

3. Haushaltsgerät nach Anspruch 1 , **dadurch gekennzeichnet, dass** das Spreizelement (20) pyramidenstumpfförmig oder kegelstumpfförmig ist.

4. Haushaltsgerät nach einem der vorhergehenden Ansprüche, **dadurch gekennzeichnet, dass** das Spreizelement (20) in einer mit dem Boden (12) verbundenen Hülse gelagert ist.

5. Haushaltsgerät nach Anspruch 4, **dadurch gekennzeichnet, dass** die Hülse in Hülsenlängsrichtung verlaufende Schlitze aufweist, welche ein Segment der Hülsenwandung abtrennen, welches als Haken (14) ausgebildet ist, und dass zumindest ein Teil der restlichen Hülsenwandung das Stützelement bildet.

6. Haushaltsgerät nach einem der Ansprüche 1 bis 5, **dadurch gekennzeichnet, dass** das Spreizelement (20) einen Keilwinkel aufweist, dessen Größe eine Selbsthemmung des Spreizelements (20) zwischen dem Haken (14) und dem Stützelement (16) bewirkt.

7. Haushaltsgerät nach einem der vorhergehenden Ansprüche, **dadurch gekennzeichnet, dass** der Boden (12) mehrere Haken (14), Stützelemente (16), Spreizelemente (20) und Stellelemente (22) aufweist.

8. Haushaltsgerät nach einem der vorhergehenden Ansprüche, **dadurch gekennzeichnet, dass** das Stützelement (16) und/oder der Haken (14) zumindest ein Anschlagelement zur Bewegungsbegrenzung des Spreizelements (20) aufweist.

9. Haushaltsgerät nach einem der vorhergehenden Ansprüche, **dadurch gekennzeichnet, dass** das Haushaltsgerät eine im oder am Boden (12) angeordnete Heizplatte (32) und eine den Boden (12) oder die Heizplatte (32) gegenüber dem Gehäuse (10) abdichtende Ringdichtung umfasst.

10. Haushaltsgerät nach einem der vorhergehenden Ansprüche, **dadurch gekennzeichnet, dass** das Haushaltsgerät ein Wasserkocher ist.

## Claims

1. Domestic appliance with a housing (10) and with a base (12) detachably fastened thereto, wherein the base (12) comprises, for fastening to the housing (10), at least one hook (14), a support element (16) associated with the hook (14), a spreading element (20) movably mounted between the hook (14) and the support element (16) and a setting element (22) disposed in operative connection with the spreading element (20), so that a movement of the setting element (22) causes a movement of the spreading element (20), whereby the hook (14) is urged by the spreading element (20) out of a starting position and into a recess (36) of the housing (10), **characterised in that** the setting element (22) is constructed as a screw and the spreading element (20) has a recess (28) with an internal thread for reception of the screw (22).

2. Domestic appliance according to claim 1, **characterised in that** the spreading element (20) is wedge-shaped.

3. Domestic appliance according to claim 1, **characterised in that** the spreading element (20) has the shape of a frustum of a pyramid or of a cone.

4. Domestic appliance according to any one of the preceding claims, **characterised in that** the spreading element (20) is mounted in a sleeve connected with the base (12).

5. Domestic appliance according to claim 4, **characterised in that** the sleeve has slots which extent in sleeve longitudinal direction and which separate a segment of the sleeve wall, which is formed as a hook (14), and that at least a part of the remaining sleeve wall forms the support element.

6. Domestic appliance according to any one of claim 1 to 5, **characterised in that** the spreading element (20) has a wedge angle, the size of which causes self-locking of the spreading element (20) between the hook (14) and the support element (16).

7. Domestic appliance according to any one of the preceding claims, **characterised in that** the base (12) has several hooks (14), support elements (16), spreading elements (20) and setting elements (22).

8. Domestic appliance according to any one of the preceding claims, **characterised in that** the support element (16) and/or the hook (14) has or have at least one abutment element for movement limitation of the spreading element (20).

9. Domestic appliance according to any one of the preceding claims, **characterised in that** the domestic appliance comprises a heating plate (32) arranged in or at the base (12) and an annular seal sealing the base (12) or the heating plate (32) relative to the housing (10).

10. Domestic appliance according to any one of the preceding claims, **characterised in that** the domestic appliance is a kettle.

## Revendications

1. Appareil ménager comportant un boîtier (10) et un fond (12) qui y est fixé de manière amovible, le fond (12) comprenant, pour sa fixation au boîtier (10), au moins un crochet (14), un élément de support (16) associé au crochet (14), un élément d'écartement (20) logé mobile entre le crochet (14) et l'élément de support (16) et un élément de réglage (22) en liaison active avec l'élément d'écartement (20) de sorte qu'un mouvement de l'élément de réglage (22) provoque un mouvement de l'élément d'écartement (20), le crochet (14) étant de ce fait poussé par l'élément d'écartement (20) pour aller d'une position de départ vers un creux (36) du boîtier (10)**, caractérisé en ce que** l'élément de positionnement (22) se présente sous la forme d'une vis et l'élément d'écartement (20) comporte un creux (28) avec un filetage intérieur pour loger la vis (22).

2. Appareil ménager selon la revendication 1, **caractérisé en ce que** l'élément d'écartement (20) est cunéiforme.

3. Appareil ménager selon la revendication 1, **caractérisé en ce que** l'élément d'écartement (20) a la forme d'une pyramide tronquée ou d'un cône tronqué.

4. Appareil ménager selon l'une des revendications précédentes, **caractérisé en ce que** l'élément d'écartement (20) est logé dans un manchon relié au fond (12).

5. Appareil ménager selon la revendication 4, **caractérisé en ce que** le manchon comporte des fentes dans la direction longitudinale du manchon, lesquelles délimitent un segment de la paroi du manchon, lequel segment se présente sous la forme d'un crochet (14), et **en ce qu'**au moins une partie du reste de la paroi du manchon constitue l'élément de support.

6. Appareil ménager selon l'une des revendications 1 à 5, **caractérisé en ce que** l'élément d'écartement (20) comporte un angle de bord d'attaque dont la taille provoque un bloquage automatique de l'élément d'écartement (20) entre le crochet (14) et l'élément de support (16).

7. Appareil ménager selon l'une des revendications précédentes, **caractérisé en ce que** le fond (12) comporte plusieurs crochets (14), éléments d'appui (16), éléments d'écartement (20) et éléments de réglage (22).

8. Appareil ménager selon l'une des revendications précédentes, **caractérisé en ce que** l'élément de support (16) et/ou le crochet (14) comportent au moins un élément de butée pour limiter le mouvement de l'élément d'écartement (20).

9. Appareil ménager selon l'une des revendications précédentes, **caractérisé en ce que** l'appareil ménager comprend une plaque chauffante (32) située dans ou sur le fond (12) et un joint annulaire qui rend étanche le fond (12) ou la plaque chauffante (32) par rapport au boîtier (10).

10. Appareil ménager selon l'une des revendications précédentes, **caractérisé en ce que** l'appareil ménager est une bouilloire.
